# EUROPEAN PATENT SPECIFICATION

(11) **EP 0 847 405 B1**
(45) Date of publication and mention of the grant of the patent: **09.10.2002**
(21) Application number: 96920043.5
(22) Date of filing: 18.05.1996
(51) Int. Cl.: C08F 2/20, C08F 14/06

(54) **POLYMERIC EMULSIFIERS FOR VINYL CHLORIDE POLYMERIZATION**
POLYMERE EMULGATOREN FÜR DIE VINYLCHLORID-POLYMERISATION
EMULSIFIANTS POLYMERES DESTINES A UNE POLYMERISATION DE CHLORURE DE VINYLE

(30) Priority: 31.08.1995 US 522502
(43) Date of publication of application: 17.06.1998
(73) Proprietor: LG Chemical Limited, Seoul 150-721 (KR); Park, Hung Soon, Avon Lake, OH 44012 (US)
(72) Inventor: PARK, Hung, Soon, Avon Lake, OH 44012 (US); LEE, Mahn, Chul, SSeoul 143-190 (KR)
(74) Representative: Grünecker, Kinkeldey, Stockmair & Schwanhäusser Anwaltssozietät
(86) International application number: KR9600073
(87) International publication number: WO97008212

(56) References cited:
- EP-A- 0 033 892
- US-A- 4 330 653
- US-A- 4 345 056
- PATENT ABSTRACTS OF JAPAN, Vol. 16, No. 126, (C-923), 1992; & JP,A,03 290 402 (KURARAY CO., LTD.).
- CHEMICAL ABSTRACTS, Vol. 116, No. 20, 18 May 1992, (Columbus, Ohio, USA), page 47, Abstract No. 195517t, S. TAKADA et al., "Dispersion Stabilizers and Aids for the Suspension Polymerization of Vinyl Compounds"; & JP,A,03 290 403 (KURARAY CO., LTD.).
- CHEMICAL ABSTRACTS, Vol. 115, No. 20, 18 November 1991, (Columbus, Ohio, USA), page 18, Abstract No. 208878t, S. TAKADA et al., "Dispersant Aids and Dispersion Stabilizer for Suspension Polymerization of Vinyl Compounds"; & JP,A,03 140 303 (KURARAY CO., LTD.).

## Description

The present invention is directed to a process for the aqueous polymerization of vinyl chloride monomer, utilizing an improved emulsion dispersant system. The improved emulsifier according to the present invention comprises a copolymer of a) a monomer having hydrophilic moieties such as carboxyl, hydroxyl, sulfonyl and/or phosphonic groups; and b) another monomer having hydrophobic moieties, such as ester and ether groups and c) a crosslinking agent having at least two monoethylenically unsaturated functional groups.

Polyvinyl chloride can be produced by various methods, such as suspension polymerization, emulsion polymerization, solution polymerization and inversion polymerization. Among these, suspension polymerization is currently the predominant method used in the art.

Generally, the suspension polymerization of vinyl chloride is conducted as follows. A reaction vessel is charged with deionized water and an emulsifier. Subsequently, vinyl chloride monomer is added to the reaction vessel, optionally with another monomer, if a copolymer of vinyl chloride is being made. With mechanical agitation, discrete droplets of vinyl chloride are formed in the continuous phase of water. The emulsifier stabilizes the discrete droplets by forming a protective layer around each droplet. Heat is applied through the jacket around the reaction vessel until a desired temperature is reached, whereupon the polymerization commences with the addition of an initiator. Normally, an oil-soluble initiator is used for suspension polymerization, while a water-soluble initiator is used for emulsion polymerization. At the reaction temperature the initiator decomposes generating free radicals which initiate the polymerization of vinyl chloride to form polyvinyl chloride (PVC).

The degree of polymerization, i.e., the extent of monomer conversion, is. deliberately manipulated in most cases to obtain a PVC having desired porosity. In general, *60%* to 90% of the vinyl chloride monomers is allowed to convert to PVC in a typical suspension polymerization process.

The discrete solid particles of PVC thus obtained are usually stripped, dried and recovered. The stripping step to remove unreacted monomer is achieved by heating the solid PVC particles under a vacuum. Prior to drying, the slurry may be centrifuged. Dry, porous PVC particles, which range in size from 10 to 1000 µm are obtained as the final product. These dry porous PVC particles are intermixed with a plasticizer for use in the production of articles comprised of PVC.

As a general structural feature, emulsifiers have an amphipathic structures which consists of two distinctive moieties; hydrophilic moieties and hydrophobic moieties. Due to this amphipathic structure, emulsifier molecules are concentrated at the interface such that their hydrophilic moieties are directed toward the water phase while their hydrophobic moieties toward the hydrocarbon phase. As a result, the interfacial tension is reduced.

Conventional emulsifier systems for the polymerization of vinyl chloride are described in the Encyclopedia of PVC, Vol. 1, 2nd Ed., edited by Nass and Heilberger. Such systems usually consist of a combination of a primary emulsifier and a secondary emulsifier. The primary emulsifier controls the polymer particle size through suppressing inter-particle agglomeration of polymer particles. The secondary emulsifier influences the morphology and extent of porosity of polymer particles through controlling intra-particle agglomeration of "primary particles", minute particles formed within each monomer droplet.

The primary emulsifiers used in the prior art include polymers such as hydroxypropyl methyl cellulose(HPMC) or a polyvinyl alcohol(PVA) having a degree of hydrolysis between about 60 and 90%. On the other hand, various secondary emulsifiers of either monomeric or polymeric type have been used.

Unfortunately, prior art emulsifiers, such as PVA or HPMC exhibit undesirable "cloud points" within the polymerization temperature range. A "cloud point" is the temperature at which an emulsifier will no longer stay in solution and will precipitate out of water, thereby upsetting the colloidal stability. Furthermore, prior art emulsifiers have difficulties in producing PVC having high bulk density and acceptable porosity. The product tends to be either a high density PVC with insufficient porosity or a high-porosity PVC having an economically unattractive low bulk density. Accordingly, there have been a number of attempts to develop new emulsifier systems for the production of PVC resins having improved properties.

U.S. Patent No. 4,603,151, for example, discloses the use of a crosslinked polyacrylic acid as a primary emulsifier for the production of porous, spherical PVC particles having an increased bulk density. As the crosslinked polyacrylic acid plays the role of a water-thickening agent, the crosslinking is a feature essential for this emulsifier to perform its intended function. However, two other emulsifiers are required to be used in conjunction with the crosslinked polyacrylic acid. These are conventional secondary emulsifiers; a polyether nonionic type and a non-polyether type.

The use of the crosslinked polyacrylic acid mentioned above has also been described in other references, e.g., U.S. Patent Nos. 4,684,668 and 4,742,082. In these references, the crosslinked polyacrylic acid is consistently used as a primary emulsifier capable of thickening water, together with one or more conventional secondary emulsifiers for the production of e.g. spherical PVC particles and skinless crosslinked PVC particles.

U.S. Patent. No. 5,155,189 on the other hand, claims the use of a low molecular weight polyacrylate(M.W.=500-500,000) as a secondary emulsifier for the preparation of a porous, particulate PVC resin having a reduced fines content. However, a conventional primary emulsifier, a high-hydrolysis PVA(72.5% hydrolysis) is also required to be used together with the polyacrylate.

The prior art references cited above thus disclose a new primary emulsifier as well as a new secondary emulsifier, but the use thereof requires the presence of conventional primary or secondary emulsifiers. Moreover, the prior art references are more or less silent about the influence by the claimed emulsifiers on other important properties of PVC such as Izod impact strength, haze and heat stability. High bulk density, per se, becomes irrelevant if the resin requires significantly higher amounts of an impact modifier. High porosity does not matter, if the resin's heat stability is low.

EP-A-033892 discloses a polymeric emulsifier comprising a copolymer of 10 to 50 wt-% of N-vinylpyrrolidone and 50 to 90 wt-% of vinyl acetate. US 4,345,056 describes a polymeric emulsifier consisting of PVA, aminoethyhydroxylpropyl cellulose and a copolymer of 30 to 50 wt-% of vinyl acetate and 50 to 70 wt-% of polyvinylpyrrolidone. In US 4,330,653, a copolymer of vinyl acetate and R₁-CO-NR2-CH=CH₂ as an emulsifier is described. Emulsifiers comprising a specific vinyl ester polymer with a specific degree of saponification or a copolymer comprising an ethylene vinyl ester are disclosed in JP 3 290 403 and JP 3 140 303, respectively.

Accordingly, there exists a need to develop a new emulsifier system, preferably a one-component emulsifier system, which is capable of imparting a desirable balance of properties to PVC resin particles produced by a suspension polymerization process.

It is an object of the present invention to provide an improved method for the suspension polymerization of vinyl chloride; or a mixture of vinyl chloride and other vinyl monomer(s), wherein the improvement lies in the use of an improved emulsifier that exhibits a cloud point at above the polymerization temperature of vinyl chloride and that is capable of producing PVC having an improved balance of desirable properties.

Said object is achieved according to the present invention by a process for the aqueous suspension polymerization of vinyl chloride or a mixture of vinyl chloride and other vinylic monomer(s) to produce a porous resin, comprising the step of polymerizing vinyl chloride or said mixture at a polymerization temperature in the presence of a dispersant composition, wherein said dispersant composition comprises a copolymer of (a) at least one hydrophilic monomer selected from the group consisting of monoethylenically unsaturated C₃-C₇ carboxylic acids, monoethylenically unsaturated C₂-C₉ alcohols, monoethylenically unsaturated C₂-C₉ sulfonic acids, and monoethylenically unsaturated C₂-C₉ phosphoric acids; (b) at least one hydrophobic monomer selected from the group consisting of monoethylenically unsaturated esters, monoethylenically unsaturated ethers, monoethylenically unsaturated amines, monoethylenically unsaturated amides, monoethylenically unsaturated nitrile, monoethylenically unsaturated silanes and hydrocarbons; and (c) a cross-linking agent having at least two monoethylenically unsaturated functional groups.

It is preferred that the cross-linking agent is selected from the group consisting of ethyleneglycol diacrylate, triacrylyl triazine, diethyleneglycol bisallyl ether, allyl sucrose, pentaerythritol diallyl ether, trimethylolpropane diallyl ether, allyl starch, methylene bisacrylamide, methylene bismethacrylamide, divinyl benzene, divinyl naphthalene, diethyleneglycol bis(allyl carbonate) and diallyl phthalate.

It is furthermore preferred that the content of said cross-linking agent in said polymeric emulsifier is 0.1 to 10 weight percent.

A judicious choice of the hydrophilic and hydrophobic moieties of the inventive polymeric emulsifiers allows a remarkable flexibility in controlling the resin properties, e.g., the degree of polymerization, bulk density, average particle size, and plasticizer absorption. Surprisingly, the resins produced with the polymeric emulsifiers of the present invention retain all of the desirable features; tougher Izod impact, less haze, and better heat stability than the resins produced with PVA and/or HPMC, as is described in the examples below.

### Emulsifier Synthesis

An emulsifier is required to have both hydrophilic and hydrophobic moieties. This molecular arrangement is known as an amphipathic structure, which forces the emulsifier molecules to be positioned at interfaces.

Hydrophilic moieties of the inventive emulsifier may be derived from monoethylenically unsaturated C₃-C₇ carboxylic acids, monoethylenically unsaturated C₂-C₉ alcohols, monoethylenically unsaturated C₂-C₉ sulfonic acids and/or monoethylenically unsaturated C₂-C₉ phosphonic acids.

The hydrophilic repeating unit in the inventive emulsifier amounts to 30 to 99 weight percent.

Monoethylenically unsaturated C₃-C₇ carboxylic acids include acrylic acid, methacrylic acid, maleic anhydride, maleic acid, itaconic acid, and crotonic acid. Preferred carboxylic acid monomers are acrylic acid, methacrylic acid, maleic anhydride.

Monoethylenically unsaturated C₂-C₉ alcohols include trimethylolpropane monoallyl ether, pentaerythritol mono(meth)acrylate, hydroxyethyl (meth)acrylate, hydroxypropyl (meth)acrylate, N-methylolacrylamide, (meth)allyl alcohol, α-hydroxymethylacrylonitrile, and allylolethanol. Preferred alcoholic monomers are trimethylolpropane monoallyl ether, pentaerythritol mono(meth)acrylate and hydroxyethyl(meth)acrylate.

Monoethylenically unsaturated C₂-C₉ sulfonic acids include styrenesulfonic acid, ethylenesulfonic acid, and 2-acrylamido-2-methyl-1-propanesulfonic acid. Preferred sulfonic monomers are styrenesulfonic acid and 2-acryloamido-2-methyl-1-propanesulfonic acid.

Monoethylenically unsaturated C₂-C₉ phosphonic acids include vinylphosphonic acid and vinylphenylphosphonic acid. preferred phosphonic monomer is vinylphosphonic acid.

partial neutralization of carboxylic, sulfonic or phosphonic functional groups is optional, but may contribute to emulsion stabilization through electrostatic repulsions among discrete droplets induced by the charge generated on the droplet surface. However, neutralizing agent may adversely affect the resin properties such as electrical conductivity, heat stability, and the resin's tint of color. Therefore, neutralization of polymeric emulsifiers must be determined judiciously.

Various chemicals can be used as a neutralization agent. Those chemicals include ammonia, sodium carbonate, borax, monoethanolamine, triethanolamine, diisopropanolamine, sodium hydroxide, potassium hydroxide, di-(2-ethylhexyl)amine, Ethomeen C25, and Armeen CD. Ethomeen C25 is the polyethylene glycol amine of coconut acid, and Armeen Cd is the primary aliphatic amine derived from coconut oil. Preferred neutralizing agents are sodium hydroxide, potassium hydroxide, and triethanolamine. The polymeric emulsifiers of the present invention can be neutralized up to 70% of acid groups, which is up to approximately pH 9. Beyond this point, detrimental mutual interferences of charged acid groups located adjacently to each other set in, which is attested by the decline of viscosity of the aqueous solution.

Hydrophobic moieties of the emulsifier according to the present invention may be derived from hydrophobic monomers copolymerizable with the above-mentioned hydrophilic monomers. The hydrophobic monomers are selected from the group consisting of hydrophobic monoethylenically unsaturated esters, ethers, amines, amides, nitriles, silanes and hydrocarbons. The hydrophobic repeating unit in the emulsifier according to the present invention amounts to 0.1 to 70 weight percent.

Monoethylenically unsaturated esters include vinyl acetate, vinyl chloroacetate, methyl (meth)acrylate, ethyl (meth)acrylate, n-butyl (meth)acrylate, isobutyl acrylate, lauryl methacrylate, cyclohexyl methacrylate, stearyl methacrylate, glycidyl methacrylate, phenyl methacrylate, benzyl methacrylate, methoxyethyl acrylate, methyl 2-cyanoacrylate, allyl 2-cyanoacrylate, 1-ethylpropyl 2-cyanoacrylate and methyl α-chloroacrylate. Preferred monoethylenically unsaturated esters are vinyl acetate, ethyl acrylate, butyl acrylate, methyl methacrylate and glycidyl methacrylate.

Hydrophobic monoethylenically unsaturated ethers include methyl vinyl ether, isobutyl vinyl ether, ethyl vinyl ether, octadecyl vinyl ether, 2-ethylhexyl vinyl ether, aminopropyl vinyl ether, and allyl glycidyl ether Preferred hydrophobic monomeric ethers are isobutyl vinyl ether, octadecyl vinyl ether, and allyl glycidyl ether.

Hydrophobic monoethylenically unsaturated amines include 2-vinylpyridine, 2-methyl-5-vinylpyridine, allyldimethylamine, and 2-vinylquinoline. Hydrophobic monomeric amides include N-vinyl-ε-caprolactam, N-isopropylacrylamide, N,N-dimethylacrylamide, and N-dimethylaminopropylacrylamide.

Monoethylenically unsaturated nitriles include acrylonitrile, and vinylidene cyanide. Acrylonitrile is preferred.

Monoethylenically unsaturated silanes include τ-methacryloxypropyl trimethoxysilane, vinylbenzylamine silane, vinyltrimethoxy silane, vinyltriacetoxy silane, and vinyltris(β-methoxyethoxy)silane. Preferred monomeric silanes are τ-methacryloxypropyltrimethyoxysilane and vinyltriacetoxy silane.

Monoethylenically unsaturated hydrocarbons include styrene, α-methylstyrene and isobutylene. Preferred monomeric hydrocarbon is styrene.

Miscellaneous monomers suitable as hydrophobic moieties of the present invention include acrolein, 1-vinylnaphthalene, 1-vinylanthracene, 3-vinylphenanthrene, vinylidene chloride, allyl chloride, allyl benzene, allyl acetate, allyl diphenyl phosphate, allylpyridinium chloride, N-vinyl-N,O-diethylisourea, and methyl vinyl ketone.

If the objective is to stabilize monomer droplets in the size of 10 to 1000µm, as is usually the case in suspension polymerization, polymeric emulsifiers are preferred over monomeric or oligomeric emulsifiers. Furthermore, if the intention is to use the emulsifiers as a primary emulsifier, or as a one-component emulsifier, crosslinked emulsifiers are required. Primary emulsifiers cover the surface of each droplet with an interfacial film having strong lateral intermolecular interactions. This, in turn, deters inter-particle agglomerations of discrete droplets. A crosslinked polymer will provide an interconnected, elastic film network around each monomeric droplet. Crosslinking also enhances viscosity, which tends to reduce the frequency of collisions between droplets. Usually, a crosslinked polymer gives a higher yield value than a non-crosslinked polymer because of the increased emulsion stability. However, if the objective is to control the structure of the primary particles within each droplet as in the case of a secondary emulsifier, crosslinking of the emulsifier becomes optional.

A crosslinker is a monomer having at least two isolated double bonds. Examples of such monomers include ethyleneglycol diacrylate, triacrylyl triazine, diethyleneglycol bisallyl ether, allyl sucrose, pentaerythritol diallyl ether, trimethylolpropane diallyl ether, allyl starch, methylene bisacrylamide, methylene bismethacrylamide, divinyl benzene, divinyl naphthalene, diethyleneglycol bis(allyl carbonate) and dially phthalate. Preferred cross-linkers are trimethylolpropane diallyl ether, pentaerythritol diallyl ether, diethyleneglycol bis(allyl carbonate) and diethyleneglycol bisallyl ether. The amount of cross-linkers required in the synthesis of the polymeric emulsifier according to the present invention is 0.01 to 10 weight percent, preferably 0.01 to 5 weight percent based on the total emulsifier composition.

Various methods can be used in polymerizing hydrophilic monomers with hydrophobic monomers. These monomers may be polymerized in solution, emulsion or in suspension. However, the preferred method is to polymerize them in an organic solvent, e.g., hexane, heptane, mineral spirits, methyl chloride, methylene chloride, methyl acetate, ethyl acetate, phenyl acetate, cyclohexane, benzene, and toluene. Preferred solvents are hexane, cyclohexane, and benzene.

The polymerization of hydrophilic monomers with hydrophobic monomers may be conducted using an oil-soluble initiator, e.g., alkanoyl, alkaroyl, and aralkanoyl peroxide and monohydroperoxide; azo compound; peroxy ester; percarbonate; and others. Specific examples include benzoyl peroxide, lauryl peroxide, diacetyl peroxide, cumene hydroperoxides, methyl ethyl ketone peroxide, diisopropylbenzene hydroperoxide, naphthoyl peroxide, acetyl cyclohexane sulfonyl peroxide, azo-bisisobutylonitrile, di-(2-ethylhexyl)peroxydicarbonate, di-(sec-butyl)peroxy dicarbonate, and t-butyl peroxypivalate. The amount of the initiator used is in the range of 0.01 to 1 parts per hundreds of monomers used to synthesize the emulsifier.

A chain-transfer agent may be used to regulate the molecular weight of the polymeric emulsifier according to this invention. Examples include formaldehyde, acetaldehyde, n-butylaldehyde, ammonium formate, mercaptoethanol, mercaptopropanol, mercaptohexanol, thioglycolic acid and trichloroethylene. In case when the polymeric emulsifier of the present invention is synthesized for use as a secondary emulsifier, the chain transfer agent may be used up to 15 parts per hundreds of monomers used to synthesize the emulsifier. A chain-transfer agent should not be used in the synthesis of the inventive polymeric emulsifier, if it is to be used as a primary emulsifier or as a one-component emulsifier.

The synthesis steps to produce the polymeric emulsifier according to the present invention may be conducted as follows: (a) charge a solvent, monomers, cross-linkers, and chain-transfer agents into a reaction vessel; (b) start agitation; (c) heat the vessel to 35 to 100°C; (d) remove the dissolved oxygen from the reacting medium by purging vigorously from the bottom of the vessel with nitrogen for 10 minutes; (e) charge initiator; (f) conduct the reaction until a desired degree of monomer conversion has taken place (usually for 6 to 10 hours); (g) stop agitation; (h) charge the slurry from the reacting vessel into a rotating vacuum dryer; (i) rotate the dryer under a pressure of about 10mmHg; (j) recover the solvent using a chilled condenser; (k) continue drying until residual solvent in the product is reduced to a desirable level; and (1) stop drying.

### Other Emulsifiers

The polymeric emulsifier according to this invention can be used alone as a one-component emulsifier in the polymerization of vinyl chloride, if it is cross-linked. However, it may very well be used in combination with other emulsifiers, e.g., any partially hydrolyzed polyvinyl alcohols(PVA) having a degree of hydrolysis of 30% up to 90%, hydroxypropylmethyl cellulose(HPMC), sorbitan monolaurate, glycerol monooleate, polyethyleneglycol amine of oleic acid, myristamidopropyl betaine, dodecylbenzene sulfonic acid, and polyoxyethylene sorbitan monooleate. Preferred emulsifiers which can be used beneficially in combination with the polymeric emulsifier according to the present invention are PVA's, HPMCs and sorbitan monolaurate. The sum of the emulsifiers preferably used in the polymerization of vinyl chloride, or a mixture of vinyl chloride and other monomer(s), amounts to 0.01 to 3 hundred parts of monomer(s)(hereinafter "phm") used. The range of 0.02 to 1 phm is more preferred.

### Monomer

The monomer(s) to be polymerized in the process of this invention may be either vinyl chloride or a mixture of vinyl chloride and other vinylic monomer(s). When such monomer mixture is used for the production of a copolymer, the content of the vinyl chloride repeating unit in the copolymer is kept above 50% by weight of the copolymer. The vinylic monomers which can be copolymerized with vinyl chloride include, for example, esters such as vinyl acetate, vinyl propionate, hydroxypropyl (meth)acrylate, methyl methacrylate ; olefins such as ethylene, propylene, (meth)acrylic acid; maleic anhydride; acrylonitrile; styrene; α-methyl styrene; vinylidene chloride, vinyl fluoride; allyl glycidyl ether, trimethylolpropane monoallyl ether, pentaerythritol triallyl ether, diallyl ether; diallyl phthalate, diallyl maleate; isobutyl vinyl ether, lauryl vinyl ether, etc.;

### Solvent

In suspension polymerization, the solvent is usually deionized water. However, a minor amount of an organic solvent, such as hexane or isopropyl alcohol may be added to the deionized water in order to facilitate homogeneous dispersion of initiators or to modify the alignment of emulsifiers at the interface. A clever choice of solvents produces different solubility parameters which will affect the distribution of the reacting monomers. Yet, the consideration of environmental concerns and manufacturing costs may not allow the use of solvents other than water. Deionized water is usually used in an amount equal to or higher than 100 phm.

### Initiators

The process according to this invention preferably uses an initiator which is miscible with a hydrocarbon liquid, although a water-soluble initiator may also be used. Hydrocarbon-soluble initiators include diacyl peroxides, such as lauroyl peroxide, benzoyl peroxide ; peroxydicarbonates such as di(2-ethylhexyl) peroxy dicarbonate, di(sec-butyl) peroxydicarbonate ; peroxyesters such as 1,1-dimethyl-3-hydroxybutyl peroxy neoheptanoate, t-butyl peroxypivalate ; peroxides such as aceylcyclohexylsulfonyl peroxide ; azo compounds such as azobis-2,4-dimethyl valeronitrile, azobis isobutylronitrile.

The above mentioned initiators may be used singly or in combination of two or more in an amount of 0.01 to 0.5 phm.

### Short-stopping Agent

The extent of vinyl chloride conversion into PVC is usually controlled within the range of 50 to 90% by adding a short-stopping agent or a stabilizer which inhibits further polymerization. Exemplary stabilizers are sulfa-containing organo-tin stabilizers, e.g., di-n-butyltino,S, S'-bis-(isooctylmercapto acetate), as well as organo phosphites, and mixed salts thereof. Other exemplary short-stopping agents include α-methyl styrene, hydroquinone, bisphenol-A; thioalcohols; acetone thiosemicarbazone; and amines. The short-stopping agent is used in an amount ranging from 0.005 to 2 phm.

### Other Additives

Other additives can be added to the aforementioned ingredients in the polymerization process of this invention. Other additives include scale inhibitors such as nitric acid, oxalic acid, etc.; defoamers such as dimethyl silicone, ethylene oxide-propylene oxide block polymers ; chain transfer agents such as trichloroethylene, butyl thioglycolate, mercaptoethanol ; chelating agents such as diethylene triamine pentaacetic acid, nitriloacetic acid, ethylene diamine tetraacetic acid. These additives can be added in suitable amounts, which are known in the art.

### Suspension Polymerization

Suspension polymerization can be carried out batchwise or semibatchwise. A semibatch process is used when a copolymer or terpolymer is to be prepared from monomers having different reactivities, but in most cases, a batch polymerization process is utilized due to its simplicity and low cost of operation. In a batch process, all ingredients are charged into a clean reactor before initiating the polymerization. The reactor can be fabricated with stainless steel or it can be lined with glass. Subsequent to the charge of all ingredients, the reactor is heated to a predetermined temperature in the range of 40 to 80°C with an adequate agitation and the reaction is allowed to proceed for a predetermined time in the range of 3 to 15 hours to achieve the desired monomer conversion and product porosity. The polymerization is terminated by adding a selected short-stopping agent when the pressure in the reactor head space drops to a level which coincides with the targeted conversion. The resulting slurry is steam-stripped to remove unreacted monomers from the resin particles under a vacuum. The steam-stripped slurry is sent to a centrifuge and then to a dryer.

The polymerization procedure according to the present invention involves the steps described below:
1. The inner surfaces of a reactor are thoroughly cleaned.
2. The cleaned surfaces are coated with a scale inhibitor.
3. Deionized water is charged to the reactor and agitation is started.
4. Emulsifiers together with other additives are charged to the reactor.
5. Initiator(s) is added to the reactor.
6. Mixing is maintained for thirty minutes, while pulling vacuum at 30mmHg.
7. Monomer(s) is charged to the reactor vessel.
8. The reactor is heated to 53-57°C to initiate the polymerization reaction.
9. A neutralizing agent, e.g., triethanol amine is added 30 minutes after the initiation, when partial neutralization of the emulsifiers is required.
10. When the head space pressure have reached a predetermined level the polymerization reaction is terminated by the addition of bisphenol-A.
11. The slurry is transferred from the reactor to a stripping column.

The emulsifier according the present invention has a cloud point of above 60°C, preferably, above 80°C.

### Resin Characterization

The resins produced with the emulsifiers according to the present invention were characterized by measuring the properties in the following seven categories: 1) degree of polymerization; 2) bulk density; 3) plasticizer absorption; 4) average particle size; 5) Izod impact; 6) haze; and 7) heat stability.

The degree of polymerization was determined according to JIS K-6721-1977.

The bulk density is the weight per unit volume(g/cc) of PVC. The bulk density is a measure of fluffiness and measured in accordance with the procedure described in ASTM D1895-89(1990).

Plasticizer absorption (plasticizer take-up) was determined by the procedure of ASTM D3367 (75)-1990.

The measurement of the average particle size followed the procedure described in ASTM D1921-89.

The Izod impact test was carried out according to ASTM D256-93a. The pendulum impact resistance of a notched PVC specimen gives a measure of the resistance of the PVC to breakage by a flexural shock and the Izod impact strength in expressed in a unit of kg-cm/cm.

The degree of haze was determined by the procedure of ASTM D1003. A roll milled PVC sample *was* preheated at 180°C for 5 minutes and hot pressed at 180°C for 5 minutes under 100kg/cm². The sample was then cooled at 25°C for 3 minutes and cut to obtain a 80mm x 45mm x 3.2mm test pieces. The degree of haze was measured with Model SM-6(Suga Test Instrument Co.) using a C-Lamp and the result is reported in percentage.

The measurement of heat stability was conducted as follows: First prepared was a compounded PVC sample consisting of: resin 100, DOP(plasticizer) 40, stabilizer(BC 747; tin liquid stabilizer) 2, and stearic acid(lubricant) 0.3. This sample was roll milled for 5.5 minutes with a twin roll mill(Nishimura, Japan) at a roll surface temperature of 145°C to obtain a sheet having a thickness of 0.7mm. The sheet was then cut to a 450mm x 30mm x 0.7mm test strip and placed in Thermotester Model LTF-ST-152293(Werner Mathis). While maintaining the Thermotester oven at 185°C, the strip moving speed was controlled at 19mm/5 minutes. The heat stability is represented by the time(minutes) for the test strip to turn black.

### Product Applications

The resins which are produced by the method described in this invention can be used to fabricate flexible or rigid objects.

### EXAMPLES

In order to further illustrate the present invention, five sets of experiments were conducted. In the first set of experiments (Example I), emulsifiers having various hydrophilic moieties were prepared, while the second set of experiments (Example II) were conducted to prepare emulsifiers having various hydrophobic moieties. The third set of experiments (Example III) were conducted to verify the efficacy of the emulsifiers containing various hydrophilic moieties in the polymerization of vinyl chloride. Similarly, the fourth set of experiments (Example IV) were carried out to verify the efficacy of the emulsifiers of the present invention which contain various hydrophobic moieties. The efficacy of each of the emulsifiers was judged based on the measured properties of the resins made therewith. The fifth and last set of experiments (Example V) were carried out to evaluate the performance of the polymeric emulsifiers of this invention in combination with other conventional emulsifiers.

### Example I. Emulsifier having various Hydrophilic Moieties

Hydrophilic moieties of the polymeric emulsifiers of the present invention can be introduced using a monomer(s) having a hydrophilic functional group; namely, carboxylic, hydroxyl, sulfonic and/or phosphonic group. As monomers representing monoethylenically unsaturated C₃-C₇ carboxylic acids, acrylic acid and methacrylic acid were selected. From the monoethylenically unsaturated C₂-C₉ alcohols, hydroxyethyl acrylate, hydroxyethyl methacrylate, trimethylolpropane monoallyl ether and ethylene glycol monovinyl ether were chosen. Styrene sulfonic acid and 2-acrylamido-2-methyl-1-propane sulfonic acid were selected from monoethylenically unsaturated C₂-C₉ sulfonic acids. Finally, vinylphosphonic acid was considered to be representative of monoethylenically unsaturated C₂-C₉ phosphonic acids.

In order to introduce hydrophobic moieties, four monomers were used; namely, ethyl acrylate, iso-butyl vinyl ether, methyl methacrylate, and vinyl acetate.

As a cross-linker, trimethylolpropane diallyl ether was used.

Each of the polymeric emulsifiers having various hydrophilic moieties shown in Table I was synthesized according to the steps previously described in the emulsifier synthesis section. In each experiment, 800 grams of monomers and 7,200 grams of cyclohexane were used to conduct the polymerization reaction in a 1.2 liters reactor equipped with three sets of 45° pitched turbine blades at 60°C with an agitation rate of 120rpm.

### Example II. Emulsifiers having various Hydrophobic Moieties

Hydrophobic moieties can be introduced by using any hydrophobic monomer(s) copolymerizable with monomers having hydrophilic functional groups. As representative hydrophobic monomers containing an ester function, ethyl acrylate, methyl methacrylate, butyl acrylate, and vinyl acetate were selected. As monomers containing an epoxide group, allyl glycidyl ether and glycidyl methacrylate were chosen. Iso-butyl vinyl ether was considered to be representative of monomeric ethers. Styrene was selected from hydrocarbon type monomers. Acrylonitrile was chosen from monomeric nitriles and t-methacryloxypropane trimethoxysilane was selected from monomeric silanes. Trimethylolpropane diallyl ether was used as a cross-linker. Acrylic acid and trimethylolpropane monoallyl ether were used to synthesize the portions having hydrophilic moieties of the inventive polymeric emulsifiers.

Each of the polymeric emulsifiers having various hydrophobic moieties shown in Table II was synthesized according to the steps previously described in the emulsifier synthesis section. In each experiment, 800 grams of monomers and 7,200 grams of cyclohexane were used to conduct the polymerization reaction in a 1.2 liters reactor equipped with three sets of 45° pitched turbine blades at 60°C with an agitation rate of 120rpm.

### Example III. Performance of Emulsifiers having various Hydrophilic Moieties

A total of thirteen experiments were conducted in order to evaluate the performance of the polymeric emulsifiers prepared in Example 1(Table I) in the polymerization of vinyl chloride. Two polymerizations were run as controls. Control A used PVA having 72.5% hydrolysis in combination with PVA having 40% hydrolysis. Control B used HPMC in combination with PVA having 40% hydrolysis.

The rest of the experiments were carried out by using each of the polymeric emulsifiers in Table I, E001-E011, in combination with the emulsifier E000 in Table I. E000 was prepared from 95 parts of acrylic acid and 5 parts of ethyl acrylate cross-linked with 0.7 parts of trimethylolpropane diallyl ether.

The polymerization was conducted at 57°C using the materials listed below in a 1m³ reactor equipped with a Pfaudler agitator, 2 cooling baffles and a condenser (agitation rate = 120rpm).

| | | |
|---|---|---|
| Vinyl chloride | 280kg | 100 PHM |
| Deionized water | | 150 PHM |
| Di (2-ethylhexyl) peroxy dicarbonate | | 0.05 PHM |
| Emulsifiers | | |
| E000 | | 0.07 PHM |
| one of E001-E011 | | 0.03 PHM |

The data in Table III show that the resins produced with the polymeric emulsifiers of this invention have higher bulk density, higher plasticizer take-up(plasticizer absorption), tougher Izod impact, less haze, and higher heat stability than the resins produced with PVA or HPMC. Large improvements in Izod impact, haze and heat stability are particularly noteworthy in view of the fact that the degree of polymerization and average particle size do not vary significantly from each other. The results unequivocally demonstrate the efficacy and viability of the polymeric emulsifiers of this invention.

### Example IV. Performance of Emulsifiers containing various Hydrophobic Moieties

A total of 11 experiments were conducted in order to evaluate the performance of the polymeric emulsifiers prepared in Example II(Table II) in the polymerization of vinyl chloride.

Two polymerizations were run as controls. Control A used PVA having 72.5% hydrolysis in combination with PVA having 40% hydrolysis. Control B used HPMC in combination with PVA having 40% hydrolysis. The rest of the experiments were carried out by using each of the polymeric emulsifiers in Table II, E101-E109, in combination with the emulsifier E000 in Table I.

Each polymerization was conducted by the procedure of Example III using the following materials:

| | | |
|---|---|---|
| Vinyl chloride 280kg | | 100 PHM |
| Deionized water | | 150 PHM |
| Di (2-ethylhexyl) peroxy dicarbonate | | 0.05 PHM |
| Emulsifiers | E000 | 0.072 PHM |
| | one of E101-E109 | 0.072 PHM |

The data in Table IV show that the resins produced with the polymeric emulsifiers of this invention have tougher Izod impact, less haze, and higher heat stability than the resins produced with the PVA or HPMC, which is consistent with the results in Table III. Furthermore, the data illustrate that the degree of polymerization, bulk density, plasticizer absorption, and average particle size of the PVC product depends upon the combination of hydrophilic and hydrophobic monomers used in preparing the emulsifier. The cross-linking is not crucial, as long as one of the emulsifiers is cross-linked. Therefore, the conclusion is drawn that the polymeric emulsifier of this invention must be cross-linked, if it is intended to be used as a primary emulsifier or as a one-component emulsifier, whereas the crosslinking is not required, if it is used as a secondary emulsifier. The data regarding the degree of polymerization, bulk density, plasticizer absorption and average particle size illustrate the flexibility in choosing the combination of the hydrophilic/hydrophobic moieties in the emulsifier of the present invention. The data show that, at an emulsifier usage level of 0.144 PHM, the observed properties vary in the ranges of 1010 to 1210 for degree of polymerization, 0.44 to 0.65 g/cc for bulk density, 7.2 to 25.7% for plasticizer absorption, and 87 to 250µm for average particle size. The optimization of the emulsifier usage level will allow an added flexibility in adjusting the resin properties.

The test results unequivocally demonstrate the efficacy and viability of the polymeric emulsifiers of this invention.

### Example V. Performance of combined Inventive/conventional Emulsifiers

This last set of experiments were conducted according to the procedure of Example III in order to test the polymeric emulsifiers of this invention in combination with each other, or with conventional emulsifiers. The results are shown in Table V. Control A used PVA having 72.5% hydrolysis in combination with PVA having 40% hydrolysis. Control B used HPMC in combination with PVA having 40% hydrolysis. Test No. P210 shows the results obtained when 0.2PHM of E000 was used alone. Test No. P202 was conducted using the combination of three polymeric emulsifiers of this invention, i.e., E101, E103 and E109. In Test No. P203, E000 of this invention was used in combination with two PVAs having different degree of hydrolysis.

The characterization data demonstrate that the polymeric emulsifiers of this invention may be used in any combination deemed necessary to meet the resin properties required in its final applications.

**Table I.**

| EMULSIFIERS HAVING VARIOUS HYDROPHILIC MOIETIES | | | | | | | | | | | |
|---|---|---|---|---|---|---|---|---|---|---|---|
| | Hydrophilic Moieties | | | | | | Hydrophobic | | | | X-L |
| | AA | MAA | TM | AMPS | SS | VP | EA | VEO | MMA | VAc | TD |
| E000 | 95 | | | | | | 5 | | | | 0.7 |
| E001 | | | | 90 | | | | | | 10 | 1 |
| E002 | | | | 80 | 10 | | | | | 10 | 1 |
| E003 | 80 | | | | 10 | | | | | 10 | 1 |
| E004 | 80 | | | 10 | | | | | | 10 | 1 |
| E005 | 50 | 50 | | | | | | | | | 1 |
| E006 | 75 | 20 | | | | | | | | 5 | 1 |
| E007 | 75 | 20 | | | | | | | 5 | | 1 |
| E008 | 75 | 20 | | | | | | 5 | | | 1 |
| E009 | 75 | 20 | | | | | 5 | | | | 1 |
| E0010 | 90 | | 5 | | | | 5 | | | | 1 |
| E0011 | 80 | | | | | 10 | | | | 10 | 1 |
| AA Acrylic Acid MAA Methacrylic Acid TM Trimethylolpropane monoallyl ether AMPS 2-acrylamido-2-methyl-1-propane sulfonic acid SS Styrene sulfonic acid VP Vinylphosphonic Acid EA Ethyl acrylate VEO Octadecyl vinyl ether MMA Methyl methacrylate VAc Vinyl acetate TD Trimethylolpropane diallyl ether X-L Cross-linker | | | | | | | | | | | |

**Table II.**

| EMULSIFIERS HAVING VARIOUS HYDROPHOBIC MOIETIES | | | | | | | | | | | | | |
|---|---|---|---|---|---|---|---|---|---|---|---|---|---|
| Experiment | H-philic | | Hydrophobic | | | | | | | | | | X-L |
| | | | ESTER | | | | EPOXY | | ETH | SIL | HC | NIT | |
| | AA | TM | EA | MMA | BA | VAc | AGE | GMA | VEI | Z6030 | SM | AN | TD |
| E101 | 77 | | | 15 | | | | | 8 | | | | 1 |
| E102 | 100 | | 10 | 10 | 10 | | | | | | | | 0.77 |
| E103 | 50 | 10 | 40 | | | | | | | | | | 0 |
| E104 | 85 | | 3 | 7 | | | | | | | 5 | | 0.77 |
| E105 | 75 | | 10 | 10 | | | | | | | | 5 | |
| E106 | 75 | | 10 | | | 5 | | 10 | | | | | 0 |
| E107 | 60 | 15 | 10 | 10 | | | 5 | | | | | | 0.4 |
| E108 | 80 | | 5 | 5 | | | 10 | | | | | | 0.5 |
| E109 | 70 | 10 | | | | | | | 20 | | | | |
| AA Acrylic Acid TM Trimethylolpropane monoallyl ether EA Ethyl acrylate MMA Methyl Methacrylate BA Butyl acrylate VAc Vinyl acetate AGE Allyl glycidyl ether GMA Glycidyl methacrylate VEI Iso-butyl vinyl ether SM Styrene AN Acrylonitrile Z6030 Gamma-methacryloxypropyltrimethoxysilane TD Trimethylolpropane diallyl ether | | | | | | | | | | | | | |

**Table III.**

| PERFORMANCE OF EMULSIFIERS HAVING VARIOUS HYDROPHILIC MOIETIES | | | | | | | | | |
|---|---|---|---|---|---|---|---|---|---|
| | Emulsifiers | | Characterization | | | | | | |
| | A PHM | B PHM | DP - | BD g/cc | PTU % | APS µ | IM kg-cm /cm | Haze % | HS min. |
| Control A | PVA72 0.07 | PVA40 0.03 | 1070 | 0.458 | 28.3 | 141 | 16.5 | 3.4 | 55 |
| Control B | HPMC 0.07 | PVA40 0.03 | 1080 | 0.458 | 21.9 | 119 | 17.8 | 4.4 | 53 |
| P001 | E000 0.07 | E010 0.03 | 1020 | 0.52 | 22.4 | 195 | 19.6 | 2.3 | 54 |
| P002 | E000 0.07 | E009 0.03 | 1030 | 0.58 | 12.1 | 198 | 19.1 | 2.6 | 58 |
| P003 | E000 0.07 | E008 0.03 | 1060 | 0.62 | 6.0 | 218 | 102.9 | 2.6 | 59 |
| P004 | E000 0.07 | E007 0.03 | 1060 | 0.84 | 5.8 | 197 | 18.3 | 2.9 | 64 |
| P005 | E000 0.07 | E006 0.03 | 1030 | 0.6 | 6.0 | 208 | 88.9 | 3 | 65 |
| P006 | E000 0.07 | E005 0.03 | 1040 | 0.61 | 6.1 | 182 | 18.5 | 3 | 61 |
| P007 | E000 0.07 | E004 0.03 | 1050 | 0.52 | 17.1 | 178 | 83.5 | 3 | 67 |
| P008 | E000 0.07 | E003 0.03 | 1070 | 0.48 | 23.3 | 283 | 75.8 | 3 | 66 |
| P009 | E000 0.07 | E002 0.03 | 1010 | 0.44 | 24.4 | 273 | 19.5 | 2.9 | 65 |
| P0010 | E000 0.07 | E001 0.03 | 1020 | 0.47 | 24.1 | 143 | 18.5 | 3.4 | 57 |
| P0011 | E000 0.07 | E011 0.03 | 1100 | 0.42 | 34.7 | 148 | 18.5 | 3.3 | 67 |
| Emulsifiers PVA72 Polyvinyl alcohol with 72.5% hydrolysis PVA40 Polyvinyl alcohol with 40% hydrolysis HPMC hydroxypropylmethyl cellulose DP Degree of polymerization following JIS K-6721-1977 BD Bulk density following ASTM D1895-89(1990) PTU Plasticizer take-up following ASTM D3367(75)-1990 APS Average particle size following ASTM D1921-89 IM Izod notched impact strength following ASTM D256-93a Haze Haze following ASTM D1003 HS Heat stability following the procedure set up by LG Chemical Ltd. | | | | | | | | | |

**Table IV.**

| PERFORMANCE OF EMULSIFIERS HAVING VARIOUS HYDROPHOBIC MOIETIES | | | | | | | | | |
|---|---|---|---|---|---|---|---|---|---|
| Experiment | Emulsifiers | | Characterization | | | | | | |
| | A | B - | DP | BD g/cc | PTU % | APS µ /cm | IM kg-cm | Haze % | HS min. |
| Control A | PVA72 | PVA40 | 1070 | 0.458 | 28.3 | 141 | 16.5 | 3.4 | 55 |
| Control B | HPMC | PVA40 | 1080 | 0.458 | 21.9 | 119 | 17.8 | 4.4 | 53 |
| P101 | E101 | E000 | 1010 | 0.54 | 15.5 | 87 | 97.9 | 1.2 | 61 |
| P102 | E102 | E000 | 1030 | 0.49 | 20.9 | 117 | 88.4 | 2.4 | 60 |
| P103 | E103 | E000 | 1060 | 0.53 | 23.5 | 92 | 25.8 | 2.7 | 58 |
| P104 | E104 | E000 | 1050 | 0.65 | 7.2 | 160 | 34.5 | 2.5 | 57 |
| P105 | E105 | E000 | 1210 | 0.45 | 14.1 | 238 | 115.4 | 2.7 | 59 |
| P106 | E106 | E000 | 1010 | 0.55 | 19.5 | 150 | 24.4 | 3 | 55 |
| P107 | E107 | E000 | 1040 | 0.51 | 18.1 | 214 | 90.5 | 1.6 | 61 |
| P108 | E108 | E000 | 1060 | 0.44 | 25.7 | 250 | 54 | 1.1 | 60 |
| P109 | E109 | E000 | 1050 | 0.51 | 20.6 | 180 | 21.2 | 0.9 | 60 |
| Emulsifiers PVA72 Polyvinyl alcohol with 72.5% hydrolysis PVA40 Polyvinyl alcohol with 40% hydrolysis HPMC hydroxypropylmethyl cellulose DP Degree of polymerization following JIS K-6721-1977 BD Bulk density following ASTM D1895-89(1990) PTU Plasticizer take-up following ASTM D3367(75)-1990 APS Average particle size following ASTM D1921-89 IM Izod notched impact strength following ASTM D256-93a Haze Haze following ASTM D1003 HS Heat stability following the procedure set up by LG Chemical Ltd. | | | | | | | | | |

**Table V.**

| PERFORMANCE OF COMBINED INVENTIVE/CONVENTIONAL MULSIFIERS | | | | | | | | | | |
|---|---|---|---|---|---|---|---|---|---|---|
| Experiment | Emulsifiers | | | Characterization | | | | | | |
| | A PHM | B PHM | C PHM | DP - | BD g/cc | PTU % | APS µ | IM kg-cm /cm | Haze % | HS min. |
| Control A | PVA72 | PVA40 | - | 1070 | 0.458 | 28.3 | 141 | 16.5 | 3.4 | 55 |
| Control B | HPMC | PVA40 | - | 1080 | 0.458 | 21.9 | 119 | 17.8 | 4.4 | 53 |
| P201 | E000 0.2 | - - | - - | 1100 | 0.54 | 10.6 | 190 | 50.4 | 1.7 | 60 |
| P202 | E101 0.05 | E103 0.03 | E109 0.02 | 1040 | 0.56 | 11.4 | 200 | 64.5 | 2.6 | 59 |
| P203 | E000 0.05 | PVA72 0.03 | PVA40 0.02 | 1050 | 0.57 | 20 | 150 | 19.6 | 3.1 | 57 |
| Emulsifiers PVA72 Polyvinyl alcohol with 72.5% hydrolysis PVA40 Polyvinyl alcohol with 40% hydrolysis HPMC Hydroxypropylmethyl cellulose EAA A random copolymer of ethylene with acrylic acid. Dow produces EAA with trademark, Primacore. Primacore 5990 was used. DP Degree of polymerization following JIS K-6721-1977 BD Bulk density following ASTM D1895-89(1990) PTU Plasticizer take-up following ASTM D3367(75)-1990 APS Average particle size following ASTM D1921-89 IM Izod notched impact strength following ASTM D256-93a Haze Haze following ASTM D1003 HS Heat stability following the procedure set up by LG | | | | | | | | | | |

While the embodiments of the subject invention have been described and illustrated, it is obvious that various changes and modifications can be made therein without departing from the present invention which should be limited only by the scope of the appended claims.

## Claims

1. A process for the aqueous suspension polymerization of vinyl chloride or a mixture of vinyl chloride and other vinylic monomer(s) to produce a porous resin, comprising the step of polymerizing vinyl chloride or said mixture at a polymerization temperature in the presence of a dispersant composition, wherein said dispersant composition comprises a copolymer of (a) at least one hydrophilic monomer selected from the group consisting of monoethylenically unsaturated C₃-C₇ carboxylic acids, monoethylenically unsaturated C₂-C₉ alcohols, monoethylenically unsaturated C₂-C₉ sulfonic acids, and monoethylenically unsaturated C₂-C₉ phosphonic acids; (b) at least one hydrophobic monomer selected from the group consisting of monoethylenically unsaturated esters, monoethylenically unsaturated ethers, monoethylenically unsaturated amines, monoethylenically unsaturated amides, monoethylenically unsaturated nitrile, monoethylenically unsaturated silanes and hydrocarbons; and (c) a cross-linking agent having at least two monoethylenically unsaturated functional groups.

2. The process of claim 1, wherein said cross-linking agent is selected from the group consisting of ethyleneglycol diacrylate, triacrylyl triazine, diethyleneglycol bisallyl ether, allyl sucrose, pentaerythritol diallyl ether, trimethylolpropane diallyl ether, allyl starch, methylene bisacrylamide, methylene bismethacrylamide, divinyl benzene, divinyl naphthalene, diethyleneglycol bis(allyl carbonate) and diallyl phthalate.

3. The process of claim 2, wherein the content of said cross-linking agent in said polymeric emulsifier is 0.1 to 10 weight percent.

## Patentansprüche

1. Verfahren für die wässrige Suspensionspolymerisation von Vinylchlorid oder einer Mischung von Vinylchlorid und anderen vinylischen Monomeren, um ein poröses Harz herzustellen, umfassend die Stufen der Polymerisierung von Vinylchlorid oder besagter Mischung bei einer Polymerisationstemperatur in der Gegenwart einer Dispersantzusammensetzung, wobei besagte Dispersantzusammensetzung ein Copolymer aus (a) mindestens einem hydrophilen Monomeren, ausgewählt aus der Gruppe bestehend aus monoethylenisch ungesättigten C₃-C₇ Carboxylsäuren, monoethylenisch ungesättigten C₂-C₉ Alkoholen, monoethylenisch ungesättigten C₂-C₉ Sulfonsäuren und monoethylenisch ungesättigten C₂-C₉ Phosphorsäuren; (b) mindestens einem hydrophoben Monomeren, ausgewählt aus der Gruppe bestehend aus monoethylenisch ungesättigten Estem, monoethylenisch ungesättigten Ethem, monoethylenisch ungesättigten Aminen, monoethylenisch ungesättigten Amiden, monoethylenisch ungesättigten Nitrilen, monoethylenisch ungesättigten Silanen und Kohlenwasserstoffen; und (c) einem Vemetzungsmittel mit mindestens zwei monoethylenisch ungesättigten funktionellen Gruppen, umfasst.

2. Verfahren nach Anspruch 1, wobei besagtes Vernetzungsmittel ausgewählt ist aus der Gruppe bestehend aus Ethylenglycoldiacrylat, Triacrylyltriazin, Diethylenglycolbisallylether, Allylsucrose, Pentaerythritoldiallylether, Trimethylolpropandiallylether, Allylstärke, Methylenbisacrylamid, Methylenbismethacrylamid, Divinylbenzol, Divinylnaphthalen, Diethylenglycolbis(allylcarbonat) und Diallylphthalat.

3. Verfahren nach Anspruch 2, wobei der Gehalt an besagtem Vernetzungsmittel in besagtem polymeren Emulgatoren von 0,1 bis 10 Gew.-% beträgt.

## Revendications

1. Procédé pour la polymérisation en suspension aqueuse de chlorure de vinyle ou d'un mélange de chlorure de vinyle et d'autre(s) monomère(s) vinylique(s) pour produire une résine poreuse, comprenant l'étape consistant à polymériser le chlorure de vinyle ou ledit mélange à une température de polymérisation en présence d'une composition dispersante, dans lequel ladite composition dispersante comprend un copolymère de (a) au moins un monomère hydrophile choisi dans le groupe constitué par les acides carboxyliques en C₃ à C₇ monoéthyléniquement insaturés, les alcools en C₂ à C₉ monoéthyléniquement insaturés, les acides sulfoniques en C₂ à C₉ monoéthyléniquement insaturés et les acides phosphoniques en C₂ à C₉ monoéthyléniquement insaturés ; (b) au moins un monomère hydrophobe choisi dans le groupe constitué par les esters monoéthyléniquement insaturés, les éthers monoéthyléniquement insaturés, les amines monoéthyléniquement insaturées, les amides monoéthyléniquement insaturés, les nitriles monoéthyléniquement insaturés, les silanes et hydrocarbures monoéthyléniquement insaturés ; et (c) un agent de réticulation ayant au moins deux groupes fonctionnels monoéthyléniquement insaturés.

2. Procédé selon la revendication 1, dans lequel ledit agent de réticulation est choisi dans le groupe constitué par le diacrylate d'éthylèneglycol, la triacrylyl triazine, l'éther bisallylique de diéthylèneglycol, le saccharose allylé, l'éther diallylique de pentaérythritol, l'éther diallylique de triméthylol-propane, l'amidon allylé, le méthylène bisacrylamide, le méthylène bisméthacrylamide, le divinyl benzène, le divinyl naphtalène, le diéthylèneglycol bis(carbonate d'allyle) et le phtalate de diallyle.

3. Procédé selon la revendication 2, dans lequel la teneur en ledit agent de réticulation dans ledit émulsifiant polymère est de 0,1 à 10 % en poids.
